# EUROPÄISCHE PATENTANMELDUNG

(11) **EP 4 620 797 A1**
(43) Veröffentlichungstag der Anmeldung: **24.09.2025**
(21) Anmeldenummer: 25159816.5
(22) Anmeldetag: 25.02.2025
(51) Int. Cl.: B62M 6/45

(54) **VERFAHREN ZUM BETREIBEN EINER ANTRIEBSEINHEIT EINES ELEKTROFAHRRADS**

(30) Priorität: 06.03.2024 DE 102024202116
(71) Anmelder: Robert Bosch GmbH, 70442 Stuttgart (DE)
(72) Erfinder: Manewald, Merlin Martin, 72764 Reutlingen (DE); Eberle, Sebastian, 72072 Tuebingen (DE); Reck, Joseph, 71093 Weil Im Schoenbuch (DE)

(57) **Zusammenfassung**

Verfahren zum Betreiben einer Antriebseinheit eines Elektrofahrrads, umfassend die Schritte:
- Ermitteln eines Fahrerdrehmoments,
- Ermitteln einer Fahrerleistung,
- Aussetzen einer Unterstützung der Antriebseinheit, wenn das Fahrerdrehmoment einen ersten Schwellwert erreicht oder unterschreitet, oder
- Aussetzen der Unterstützung der Antriebseinheit, wenn die Fahrerleistung einen ersten Schwellwert erreicht oder unterschreitet, wobei das das Aussetzen der Unterstützung der Antriebseinheit im Falle eines Erreichens oder Unterschreitens des ersten Schwellwerts des Fahrerdrehmoments nach einer ersten Verzögerungszeit TT1, oder im Falle eines Erreichens oder Unterschreitens des ersten Schwellwerts der Fahrerleistung nach einer ersten Verzögerungszeit TP1, erfolgt.

## Beschreibung

### Stand der Technik

Die vorliegende Erfindung betrifft ein Verfahren zum Betreiben einer Antriebseinheit eines Elektrofahrrads, und ein Elektrofahrrad.

Bekannt sind Elektrofahrräder mit Antriebseinheiten, um ein durch einen Fahrer erzeugtes Fahrerdrehmoment mittels Motorkraft zu unterstützen. Üblicherweise erfolgt die motorische Unterstützung dabei dann, wenn der Fahrer selbst ein gewisses Fahrerdrehmoment aufbringt, das heißt nur während einer Pedalbetätigung durch den Fahrer. Stoppt der Fahrer die Pedalbetätigung, ist vorgesehen oder beispielsweise auch aufgrund gesetzlicher Vorgaben vorgeschrieben, dass die Erzeugung eines unterstützenden Motordrehmoments stoppt. Die Bereitstellung der Antriebsleistung, das heißt beispielsweise ein Verhältnis der bereitgestellten Antriebsleistung zu der vom Fahrer erzeugten Tretleistung, kann mittels verschiedener Fahrermodi variiert werden. Insbesondere können dabei auch besonders sparsame Modi ausgewählt werden, sodass eine möglichst hohe Reichweite des Elektrofahrrads erzielt werden kann. Üblicherweise ist dabei stets ein Kompromiss zwischen hohem Fahrkomfort, das heißt optimaler Unterstützung des Fahrers, was beispielsweise nur bei aktivem und/oder mitlaufendem Motor ermöglicht werden kann, und möglichst hoher Effizienz und damit einer hohen Reichweite des Elektrofahrrads zu finden. Jedoch wird bei gängigen Verfahren die Motorunterstützung üblicherweise in geringem Maße auch dann aufrechterhalten, wenn die Fahrsituation nur eine geringe Antriebsleistung erfordert, welche auch vom Fahrer allein bewältigt werden könnte

### Offenbarung der Erfindung

Das erfindungsgemäße Verfahren mit den Merkmalen des Anspruchs 1 zeichnet sich demgegenüber dadurch aus, dass eine besonders hohe Energieeffizienz bei gleichzeitig gesteigertem Fahrkomfort, wie beispielsweise reduzierter Geräuschentwicklung bei einer Fahrt mit dem Elektrofahrrad ermöglicht werden kann. Insbesondere kann gleichzeitig ein besonders hoher Fahrkomfort für einen Fahrer des Elektrofahrrads bereitgestellt werden. Dies wird erfindungsgemäß erreicht durch ein Verfahren zum Betreiben einer Antriebseinheit eines Elektrofahrrads, umfassend die Schritte:
- Ermitteln einer Fahrerleistung,
- Aussetzen der Unterstützung der Antriebseinheit, wenn das Fahrerdrehmoment Ermitteln eines Fahrerdrehmoments,
- einen ersten Schwellwert ST1 erreicht oder unterschreitet, oder
- Aussetzen der Unterstützung der Antriebseinheit, wenn das Fahrerdrehmoment einen ersten Schwellwert SP1 erreicht oder unterschreitet, wobei das Aussetzen der Unterstützung der Antriebseinheit im Falle eines Erreichens oder Unterschreitens des ersten Schwellwerts ST1 nach einer ersten Verzögerungszeit TT1 erfolgt oder im Falle eines Erreichens oder Unterschreitens des ersten Schwellwerts SP1 nach einer ersten Verzögerungszeit TP1

Mit anderen Worten wird bei dem Verfahren die Unterstützung der Antriebseinheit ausgesetzt, während der Fahrer weiterhin die Pedale betätigt, insbesondere ein Drehmoment erzeugt. Der Fahrer erzeugt ein geringes Drehmoment oder eine geringe Fahrerleistung auf einen Kurbeltrieb des Fahrrads. Dadurch kann beim Betrieb des Elektrofahrrads besonders viel Energie, die für den Betrieb der Antriebseinheit erforderlich ist, eingespart werden, um eine besonders hohe Reichweite, beispielsweise mit einer Batterieladung, zu ermöglichen.

Dadurch, dass die Unterstützung durch die Antriebseinheit unterhalb einem bestimmten Schwellwert ST1 des Fahrerdrehmoments oder dem weiteren Schwellwert SP1 der Fahrerleistung ausgesetzt wird, wird zudem sichergestellt, dass der Fahrer keine hohen Tretkräfte selbst aufbringen muss, um das Elektrofahrrad fortzubewegen, insbesondere da sich das Elektrofahrrad bereits in einem Fahrbetrieb befindet, in dem nur eine kleines Fahrerdrehmoment oder eine kleine Fahrerleistung erforderlich ist. Zudem bietet das Verfahren den Vorteil, dass aufgrund der Abschaltung der Antriebseinheit möglichst frühzeitig und für möglichst lange Zeiträume ein besonders geräuscharmer Betrieb des Elektrofahrrads ermöglicht werden kann.

Das Ermitteln des Fahrerdrehmoments bezieht sich auf die Messung einer Kraft, die der Fahrer auf die Pedale ausübt, um das Elektrofahrrad anzutreiben. Insbesondere kann das Fahrerdrehmoment mittels eines Drehmomentsensors ermittelt werden, der beispielsweise in einer Tretkurbel oder einem Tretlager des Elektrofahrrad installiert ist. Der Drehmomentsensor misst eine auf die Pedale ausgeübte Kraft und wandelt sie in ein elektrisches Signal um, das beispielsweise von einer Steuereinheit des Elektrofahrrads verarbeitet wird.

Das Aussetzen der Unterstützung der Antriebseinheit umfasst insbesondere ein Deaktivieren der Drehmomenterzeugung der Antriebseinheit angesehen, beispielsweise indem eine Stromversorgung der Antriebseinheit unterbrochen wird. Insbesondere wird durch das Abschalten der Motorunterstützung ein Stromverbrauch der Antriebseinheit auf den Ruhestrom reduziert

Der erste Schwellwert ST1 kann als ein vordefinierter numerischer Wert beschrieben sein, der insbesondere ein minimales Fahrerdrehmoment repräsentiert, das erforderlich ist, um die Unterstützung der Antriebseinheit des Elektrofahrrads aufrechtzuerhalten. Wenn das vom Fahrer erzeugte Drehmoment den ersten Schwellwert ST1 erreicht oder unterschreitet, wird die elektrische Unterstützung ausgesetzt. Insbesondere steht das Erreichen oder Unterschreiten in Zusammenhang mit einer fallenden Flanke des Fahrerdrehmoments. Der Wert des ersten Schwellwerts ST1 kann insbesondere variabel ausgeführt sein. Er kann beispielsweise in Newtonmeter (Nm) angegeben werden, um die auf die Pedale ausgeübte Kraft zu quantifizieren. Ein niedrigerer Wert des ersten Schwellwerts ST1 bedeutet, dass weniger Fahrerdrehmoment erforderlich ist, um die Unterstützung aufrechtzuerhalten, während ein höherer Wert eine größere Anstrengung erfordert.

Der zweite Schwellwert ST2 kann als ein vordefinierter numerischer Wert beschrieben sein, der insbesondere ein maximales Fahrerdrehmoment repräsentiert, bis zu dem die Unterstützung der Antriebseinheit des Elektrofahrrads ausgesetzt ist. Indem, bevorzugt ST2 größer ST1 gewählt wird, wird eine Hysterese für das Aussetzen und Einsetzen der Motorunterstützung in Abhängigkeit von dem Fahrerdrehmoment erzeugt. Dies ist vorteilhaft, um ein zu häufiges Ein- und Aussetzen der Motorunterstützung zu vermeiden. Ein zu häufiges Ein- und Aussetzen der Motorunterstützung kann für den Fahrer störend wirken.

Der erste Schwellwert SP1 kann als ein vordefinierter numerischer Wert beschrieben sein, der insbesondere minimalen Wert der Fahrerleistung repräsentiert, bei dem die Motorunterstützung ausgesetzt wird, welche insbesondere erforderlich ist, um die Unterstützung der Antriebseinheit des Elektrofahrrads aufrechtzuerhalten. Wenn die vom Fahrer erzeugte Fahrerleistung den ersten Schwellwert SP1 erreicht oder unterschreitet, wird die elektrische Unterstützung ausgesetzt. Insbesondere steht das Erreichen oder Unterschreiten in Zusammenhang mit einer fallenden Flanke der Fahrerleistung. Der Wert des ersten Schwellwerts SP1 kann insbesondere variabel ausgeführt sein. Die Fahrerleistung wird insbesondere als Leistung im physikalischen Sinne verstanden und in Watt (W) angegeben. Ein niedrigerer Wert des ersten Schwellwerts SP1 bedeutet, dass weniger Fahrerleistung erforderlich ist, um die Unterstützung aufrechtzuerhalten, während ein höherer Wert eine größere Anstrengung erfordert.

Der zweite Schwellwert SP2 kann als ein vordefinierter numerischer Wert beschrieben sein, der insbesondere eine maximales Fahrerleistung repräsentiert, bis zu der die Unterstützung der Antriebseinheit des Elektrofahrrads ausgesetzt ist. Ebenso wird, indem bevorzugt SP2 größer SP1 gewählt wird, eine Hysterese für das Aussetzen und Einsetzen der Motorunterstützung in Abhängigkeit von der Fahrerleistung erzeugt. Dies ist vorteilhaft, um ein zu häufiges Ein- und Aussetzen der Motorunterstützung zu vermeiden. Ein zu häufiges Ein- und Aussetzen der Motorunterstützung kann für den Fahrer störend wirken.

Insbesondere werden sowohl die Fahrerleistung als auch das Fahrerdrehmoment ermittelt, wobei die Verzögerungszeit TT1 oder TP1 in Abhängigkeit des Erreichens oder Unterschreitens des jeweiligen Schwellwerts SP1 oder ST1 gestartet wird.

Insbesondere werden sowohl die Fahrerleistung als auch das Fahrerdrehmoment ermittelt, wobei die zweiten Verzögerungszeiten TT2 oder TP2 in Abhängigkeit des Erreichens oder Überschreitens des jeweiligen Schwellwerts SP1 oder ST1 gestartet wird.

Insbesondere kann die elektrische Unterstützung erst dann wieder eingesetzt werden, wenn das ermittelte Fahrerdrehmoment durchgängig für die vordefinierte Zeitdauer TT2 den Schwellwert ST2 erreicht oder überschreitet.

Insbesondere kann die Unterstützung durch die Antriebseinheit erst dann wieder aktiviert werden, wenn die ermittelte Fahrerleistung den Schwellwert SP2 für die vordefinierte Zeitdauer TP2 kontinuierlich erreicht oder überschreitet.

Durch eine sorgfältige Auswahl der Zeitdauern TT1, TT2, TP1 und TP2 kann vermieden werden, dass die Motorunterstützung zu oft ein- und ausgeschaltet wird. Dies geschieht, indem erst mit einer Verzögerung auf das Überschreiten oder Unterschreiten eines Schwellenwerts reagiert wird. Ein häufiges Ein- und Ausschalten der Motorunterstützung kann den Fahrer stören.

Insbesondere wird zusätzlich eine Kadenz ermittelt. Die Kadenz bezieht sich auf eine Geschwindigkeit, mit der der Fahrer die Pedale tritt, während die Fahrerleistung die vom Fahrer erzeugte Leistung darstellt. Die Kadenz kann beispielsweise mittels eines Kadenzsensors ermittelt. Alternativ oder zusätzlich kann die Ermittlung der Kadenz mittels einer Motordrehzahl und einem Übersetzungsverhältnis von Motor auf Kettenblatt ermittelt werden. Mittels der ermittelten Kadenz kann durch Multiplikation aus Kadenz und dem insbesondere zuvor bestimmten Fahrerdrehmoment, die Fahrerleistung in Watt ermittelt werden.

Mit anderen Worten wird bei diesem Verfahren die Unterstützung durch die Antriebseinheit ausgesetzt, selbst wenn der Fahrer die Pedale betätigt. Die Unterstützung wird ausgesetzt, wenn der Fahrer nur geringe Eigenleistung oder ein niedriges Drehmoment aufbringt, insbesondere eine geringe Tretkraft oder Tretleistung. Dadurch kann beim Betrieb des Elektrofahrrads eine erhebliche Menge an Energie eingespart werden, die normalerweise für den Antrieb des Fahrzeugs benötigt wird. Dies ermöglicht eine besonders hohe Reichweite mit nur einer Batterieladung.

Durch das Abschalten der Antriebseinheit unterhalb bestimmter Schwellwerte für die Fahrerleistung oder das Fahrerdrehmoment wird auch sichergestellt, dass der Fahrer keine hohen Tretkräfte zur Bewegung des Fahrzeugs aufbringen muss, um das Elektrofahrrad fortzubewegen. Beispielsweise kann dies bei einer Bergab-Fahrt eintreten. Dies ist besonders vorteilhaft, da das Elektrofahrrad bereits in Bewegung ist und nur eine geringe Antriebsleistung oder Fahrerdrehmoment erforderlich ist.

Ein weiterer Vorteil dieses Verfahrens besteht darin, dass es einen besonders geräuscharmen Betrieb des Elektrofahrrads ermöglicht, da die Antriebseinheit frühzeitig und für längere Zeiträume abgeschaltet wird.

Insbesondere werden sowohl die Fahrerleistung als auch das Fahrerdrehmoment daraufhin überprüft, ob sie den ersten oder den zweiten Schwellwert erreichen, über- oder unterschreiten. Die Entscheidung, die Unterstützung der Antriebseinheit auszusetzen, hängt also davon ab, ob entweder die Fahrerleistung oder das Fahrerdrehmoment zuerst den Schwellwert erreicht, über- oder unterschreitet. Mit anderen Worten ermöglicht die alternative Überprüfung, ob die Fahrerleistung oder das Fahrerdrehmoment einen Schwellwert erreicht, über- oder unterschritten hat, eine zuverlässige Steuerung der Antriebseinheit.

Das innovative Verfahren, das alternativ oder zusätzlich zu dem zweiten Schwellwert SP2 den zweiten Schwellwert des Fahrerdrehmoments ST2 verwendet, stellt insbesondere sicher, dass auch bei niedrigen Kadenzen, wie sie beispielsweise beim Anfahren auftreten, eine erforderliche Unterstützung bereitgestellt wird. Dies ist von großer Bedeutung, da eine solche Unterstützung möglicherweise nicht oder erst mit Verzögerung aktiviert würde, wenn nur die Fahrerleistung überwacht wird.

Vorzugsweise erfolgt das Ermitteln der Fahrerleistung dadurch, dass die erfasste Fahrerleistung über einen vorbestimmten Zeitraum, von beispielsweise mindestens 1 Sekunde, bevorzugt maximal 5 Sekunden, gemittelt wird.

Bevorzugt erfolgt das Aussetzen der Unterstützung der Antriebseinheit nicht sofort, sondern nach einer ersten Verzögerungszeit TT1 oder nach einer ersten Verzögerungszeit TP1. Mit anderen Worten startet beispielsweise ein Countdown bei einem ersten Erreichen oder Unterschreiten des Schwellwerts ST1. Dabei ermöglicht die Verzögerungszeit dem Fahrer beispielsweise, das Fahrerdrehmoment oder die Fahrerleistung zu erhöhen, um den ersten Schwellwert ST1 oder den Schwellwert SP1 erneut zu erreichen oder zu überschreiten. Wenn das Fahrerdrehmoment den ersten Schwellwert ST1 während der ersten Verzögerungszeit TT1 nicht erreicht oder überschreitet, wird die Unterstützung der Antriebseinheit ausgesetzt. Das Erreichen oder Überschreiten des Schwellwerts ST1 hätte eine Zurücksetzung des Countdowns der Verzögerungszeit auf einen Startwert zur Folge. Insbesondere befindet sich das Aussetzen während des Countdowns in einem Übergangszustand, bei dem das Deaktivieren der Drehmomenterzeugung noch nicht stattgefunden hat.

Bevorzugt wird das Aussetzen der Unterstützung beendet,
- Wenn das Fahrerdrehmoment einen zweiten Schwellwert des Fahrerdrehmoments erreicht oder überschreitet, insbesondere nach einer zweiten Verzögerungszeit und/oder
- Wenn die Fahrerleistung einen zweiten Schwellwert der Fahrerleistung, insbesondere nach einer zweiten Verzögerungszeit,
- wobei der zweite Schwellwert größer oder gleich dem ersten Schwellwert ist,
- wobei der zweite Schwellwert größer oder gleich dem ersten Schwellwert ist,

Mit anderen Worten erfolgt das Beenden des Aussetzens der Unterstützung der Antriebseinheit nicht sofort, sondern nach einer zweiten Verzögerungszeit TT2 oder nach einer zweiten Verzögerungszeit TP2. Beispielsweise startet ein Countdown bei einem ersten Erreichen oder Überschreiten des Schwellwerts ST2. Wenn das Fahrerdrehmoment den zweiten Schwellwert ST2 während der zweiten Verzögerungszeit TT2 nicht unterschreitet, wird die Unterstützung der Antriebseinheit eingesetzt. Ein erneutes Unterschreiten des Schwellwerts ST2 hätte eine Zurücksetzung des Countdowns der Verzögerungszeit auf einen Startwert zur Folge. Insbesondere befindet sich das Einsetzen während des Countdowns in einem Übergangszustand, bei dem das Aktivieren der Drehmomenterzeugung noch nicht stattgefunden hat.

Der zweite Schwellwert ST2 ist dabei größer oder gleich dem ersten Schwellwert ST1, während der zweite Schwellwert SP2 alternativ oder zusätzlichen größer oder gleich dem ersten Schwellwert SP1 ist. Dies bedeutet insbesondere, dass die Motorunterstützung nicht nur ausgesetzt wird, wenn das Fahrerdrehmoment oder die Fahrerleistung unter einen bestimmten Wert fällt, sondern auch dann, wenn sie einen bestimmten Wert überschreitet. Das Aussetzen der Motorunterstützung bei Erreichen oder Überschreiten des zweiten Schwellwerts ST2 oder SP2 wird insbesondere durch eine zweite Verzögerungszeit TT2 beziehungsweise TP2 verlängert.

Vorteilhafterweise kann durch eine geeignete Wahl der Schwellwerte SP1 und SP2 sowie der Zeiten TP1 und TP2, sowie ST1, ST2, TT1, TT2 kann eine Hysterese erreicht werden, die ein zu häufiges Ein-/Ausschalten vermeidet. Insbesondere können die Schwellwerte SP1 und SP2 und/oder die Schwellwerte ST1 und ST2 gleich gewählt werden, wobei die Hysterese dabei über eine geeignete Wahl der Zeiträume TP1 und TP2, beziehungsweise TT1 und TT2 erfolgt.

Insbesondere erfolgt das Aussetzen der Unterstützung der Antriebseinheit auch bei Erreichen oder Überschreiten eines zweiten Schwellwerts ST2 des Fahrerdrehmoments und/oder einem Erreichen oder Überschreiten eines zweiten Schwellwerts der Fahrerleistung SP2, insbesondere für eine zweite Verzögerungszeit TT2 und/oder einer zweiten Verzögerungszeit TP2, erfolgt, wobei der zweite Schwellwert (ST2) größer oder gleich dem ersten Schwellwert (ST1) ist, wobei der zweite Schwellwert (SP2) größer oder gleich dem ersten Schwellwert (SP1) ist.

Mit anderen Worten zeichnet sich diese Ausführungsform dadurch aus, dass die Aussetzung der Unterstützung der Antriebseinheit nicht nur bei Unterschreiten des ersten Schwellwerts ST1 des Fahrerdrehmoments oder des ersten Schwellwerts SP1 der Fahrerleistung erfolgt, sondern auch bei Erreichen oder Überschreiten eines zweiten Schwellwerts ST2 des Fahrerdrehmoments und/oder eines zweiten Schwellwerts SP2 der Fahrerleistung verlängert, beziehungsweise verzögert wird.

Weiter bevorzugt wird das Aussetzen der Unterstützung der Antriebseinheit beibehalten,
- wenn das Fahrerdrehmoment (72) den zweiten Schwellwert (ST2) während der zweiten Verzögerungszeit (TT2) unterschreitet, oder
- wenn die Fahrerleistung (54) den zweiten Schwellwert (SP2) während der zweiten Verzögerungszeit (TP2) unterschreitet

Bevorzugt wird der erste Schwellwert ST1, der zweite Schwellwert ST2 und/oder insbesondere die Zeiten TT1 und/oder TT2 in Abhängigkeit weiterer ermittelter Größen, insbesondere der zeitlichen Änderungsrate des Fahrerdrehmoments, bestimmt. Dies bedeutet, dass die Festlegung der Schwellwerte nicht nur auf konstanten Werten basiert, sondern insbesondere auch auf der zeitlichen Änderungsrate des Fahrerdrehmoments basieren kann. Bevorzugt erfolgt eine Anpassung der Werte auf Basis eines zeitlichen Verlaufs des Fahrerdrehmoments. Das Fahrerdrehmoment kann sich im Laufe der Zeit ändern, beispielsweise während des Beschleunigens. Insbesondere durch die Berücksichtigung der zeitlichen Änderungsrate des Fahrerdrehmoments können die Schwellwerte dynamisch angepasst werden. Beispielsweise kann mit dieser Ausführungsform eine noch präzisere Anpassung der Motorunterstützung ermöglicht werden. Es ermöglicht insbesondere eine dynamische Steuerung, die auf die aktuellen Bedingungen und das Fahrverhalten des Fahrers reagiert. Dies trägt zu einer verbesserten Fahrerfahrung und einer optimierten Nutzung der E-Bike-Batterie bei.

Bevorzugt wird der erste Schwellwert SP1 und/oder der zweite Schwellwert SP2, sowie insbesondere die Zeiten TP1 und/oder TP2 in Abhängigkeit weiterer ermittelter Größen, insbesondere der zeitlichen Änderungsrate der Fahrerleistung, bestimmt. Dies bedeutet, dass die Festlegung der Schwellwerte nicht nur auf konstanten Werten basiert, sondern insbesondere auch auf der zeitlichen Änderungsrate der Fahrerleistung basieren kann. Bevorzugt erfolgt eine Anpassung der Werte auf Basis eines zeitlichen Verlaufs der Fahrerleistung. Die Fahrerleistung kann sich im Laufe der Zeit ändern, beispielsweise während des Beschleunigens. Insbesondere durch die Berücksichtigung der zeitlichen Änderungsrate der Fahrerleistung können die Schwellwerte dynamisch angepasst werden. Beispielsweis kann mit dieser Ausführungsform eine noch präzisere Anpassung der Motorunterstützung ermöglicht werden. Es ermöglicht insbesondere eine dynamische Steuerung, die auf die aktuellen Bedingungen und das Fahrverhalten des Fahrers reagiert. Dies trägt zu einer verbesserten Fahrerfahrung und einer optimierten Nutzung der Elektrofahrrad- Batterie bei.

Weiter bevorzugt liegt der erste Schwellwert SP1 in einem Bereich von 10 W bis 150 W, bevorzugt 20 W bis 80 W besonders bevorzugt 30 W liegt.

Weiter bevorzugt liegt der zweite Schwellwert SP2 in einem Bereich von 10 W bis 250W, bevorzugt 50 W bis 150 W, besonders bevorzugt 80 W liegt.

Bevorzugt liegt der erste Schwellwert ST1 in einem Bereich von 0 Nm bis 20 Nm, bevorzugt 3 Nm bis 10Nm, besonders bevorzugt bei 5Nm.

Bevorzugt liegt der zweite Schwellwert ST2 in einem Bereich von 5 Nm bis 100 Nm, bevorzugt 10 Nm bis 30Nm, besonders bevorzugt bei 20Nm.

Bevorzugt werden folgende weitere Schritte durchgeführt:
- Ermitteln eines Unterstützungsdrehmoments umfasst, wobei das Unterstützungsdrehmoment, ein vom Elektromotor erzeugtes Drehmoment ist und dem Fahrerdrehmoment hinzuaddiert wird, wobei das Unterstützungsdrehmoment bei dem Aussetzen der Unterstützung der Antriebseinheit heruntergefahren wird, wobei das Unterstützungsdrehmoment bei dem Beenden des Aussetzens der Unterstützung der Antriebseinheit, hochgefahren wird. Das Herunterfahren und/oder das Steigern der Unterstützungseinheit erfolgt sprunghaft, linear, progressiv, degressiv oder dergleichen. Alternativ oder zusätzlich kann auch eine Kombination zuvor genannter Charakteristika des Herunterfahrens oder Steigerns des Unterstützungsdrehmoments sein. Beispielsweise erfolgt das Herunterfahren oder das Steigern in einer Rampe. Insbesondere startet das Herunterfahren nach der ersten Verzögerungszeit TT1 oder der ersten Verzögerungszeit TP1 und das Hochfahren nach der zweiten Verzögerungszeit TP2 oder zweiten Verzögerungszeit TT2.

Das Aussetzen der Unterstützung der Antriebseinheit und das Beenden des Aussetzens erfolgt insbesondere unter Zuhilfenahme eines Motor-Faktors. Als Motor-Faktor wird dabei ein Zahlenwert verwendet, der mit dem vom Elektromotor erzeugten Drehmoment, welches zur Ansteuerung der Antriebseinheit verwendet wird, multipliziert wird. Der Motor-Faktor wird dabei in Abhängigkeit der ermittelten Fahrerleistung als ein Wert zwischen 0 und 1 ermittelt. 0 bedeutet dabei, dass die Motorunterstützung vollständig abgeschaltet wird, und 1 bedeutet, dass die Motorunterstützung wie in einem normalen Fahrmodus, beispielsweise in Abhängigkeit des Fahrerdrehmoments erzeugt wird.

Bevorzugt wird die erste Verzögerungszeit TT1 und/oder TP1 und/oder die zweite Verzögerungszeit TT2 und/oder TP2 unter Berücksichtigung des Fahrerdrehmoments und/oder der Fahrerleistung, insbesondere dessen zeitlicher Änderungsrate, bestimmt. Mit anderen Worten bedeutet dies, dass die Verzögerungszeiten, in denen die Motorunterstützung ausgesetzt wird, basierend auf dem gemessenen Fahrerdrehmoment und/oder der Fahrerleistung und insbesondere deren zeitlicher Änderungsrate angepasst werden. Durch die Berücksichtigung dieser Faktoren kann beispielsweise eine noch präzisere und individuellere Steuerung der Motorunterstützung erreicht werden.

Bevorzugt weist die erste Verzögerungszeit TT1 eine Zeitdauer von 3 Sekunden und/oder die zweite Verzögerungszeit TT2 eine Zeitdauer von 0 bis 1 Sekunden, bevorzugt 0 Sekunden auf, sowie die die erste Verzögerungszeit TP1 eine Zeitdauer von 3 Sekunden und/oder die zweite Verzögerungszeit TP2 eine Zeitdauer von 0 bis 1 Sekunden, bevorzugt 0 Sekunden auf. Insbesondere können die Verzögerungszeiten TT1, TT2, TP1, TP2, in denen die Motorunterstützung ausgesetzt oder das Aussetzen beendet wird, basierend auf verschiedenen Faktoren angepasst werden. Dazu gehören beispielsweise die Kadenz, die Geschwindigkeit des Fahrzeugs, die Neigung des Fahrzeugs, die geografische Position, die verstrichene Fahrzeit, der Batterieladezustand und physiologische Leistungsdaten des Fahrers. Durch die Berücksichtigung dieser Faktoren kann eine individuellere und anpassungsfähigere Steuerung der Motorunterstützung erreicht werden. Dies ermöglicht vorteilhafter Weise eine optimale Anpassung der Motorunterstützung an die spezifischen Bedingungen und Anforderungen des Fahrers während der Fahrt. Es sei angemerkt, dass die Bedingungen auch auf eine dynamische Anpassung der Schwellwerte angewendet werden kann. Insbesondere kann direkt nach dem Ende des Aussetzens Unterstützung der Antriebseinheit, SP1 unterhalb SP2 definiert werden und sich SP1 und SP2 mit fortdauernder Unterstützung aneinander annähern. Ebenso kann direkt nach dem Ende des Aussetzens Unterstützung der Antriebseinheit, ST1 unterhalb ST2 definiert werden und sich ST1 und ST2 mit fortdauernder Unterstützung aneinander annähern. Beispielsweise kann SP1 bei 50W starten und SP2 bei 100W definiert sein. Bei einer Fahrerleistung größer oder gleich 100W kommt es zum Einschalten der Unterstützung. Erfolgt nun dauerhaft eine Unterstützung, kann sich SP1 fortlaufend an die 100W annähern, sodass nach erfolgter Annäherung auch das Abschalten bei kleiner gleich 100W erfolgt. Das Abschalten setzt den Wert von SP1 auf 50W zurück. Der Vorteil ist, dass sowohl das Beenden des Aussetzens als auch das Aussetzen der Unterstützung der Antriebseinheit, insbesondere nach einer Annäherungszeit bei gleichem Schwellwert, in diesem Beispiel 100W, erfolgt, was für den Fahrer mitunter intuitiver nachvollziehbar ist. Da sich die zeitlich veränderlichen Schwellwerte nur langsam annähern, kann dennoch ein zu häufiges und mitunter störendes Ein- und Ausschalten der Motorunterstützung (sogenanntes "Toggeln") vermieden werden

Bevorzugt werden die folgenden weiteren Schritte durchgeführt:
- Beenden, insbesondere ein unmittelbares Beenden, des Aussetzens der Unterstützung, bei einem Erreichen oder Überschreiten eines dritten Schwellwerts ST3 des Fahrerdrehmoments,
- Anpassen der zweiten Verzögerungsdauer TT2 auf einen Wert von 0 Sekunden.

Der dritte Schwellwert des Fahrerdrehmoments ST3 ist ein Schwellwert, der insbesondere ein Kickdown oder einen starken Anfahrvorgang repräsentiert. Das bedeutet, dass wenn das Fahrerdrehmoment den dritten Schwellwert ST3 erreicht oder überschreitet, die Motorunterstützung ohne Einschränkung und insbesondere ohne Verzögerungszeit erfolgt. Dies ermöglicht dem Fahrer, bei Bedarf instantan Leistung abzurufen, beispielsweise für einen schnellen Start oder eine starke Beschleunigung und gewährleistet eine nahtlose und reaktionsschnelle Motorunterstützung in Situationen, in denen eine erhöhte Leistung erforderlich ist.

Bevorzugt liegt der dritte Schwellwert ST3 in einem Bereich von 10 Nm bis 50 Nm, bevorzugt 20 Nm bis 80 Nm, besonders bevorzugt beträgt er 40 Nm.

Bevorzugt wird der folgende weitere Schritt durchgeführt:
- Anpassen des Schwellwerts ST1, ST2, ST3, SP1 und/oder des Schwellwerts SP2 in Abhängigkeit einer Zeitdauert T3 oder einer Zeitdauert T4, wobei die Zeitdauer T3 eine Zeitdauer ohne die Unterstützung der Antriebseinheit ist,
   wobei die Zeitdauert T4 eine Zeitdauer ab Beendigung des Aussetzens der Antriebseinheit ist,
   wobei insbesondere bei einer zunehmenden Zeitdauer T4 der Schwellwert SP1 dem Schwellwert SP2 angeglichen wird oder
   wobei bei einer zunehmenden Dauer T3 der Schwellwert SP2 dem Schwellwert SP1 angeglichen wird.

Mit anderen Worten wird in dem weiteren Schritt der Schwellwert ST1, ST2, ST3, SP1 und/oder SP2 angepasst, abhängig von der Zeitdauer T4 oder der Zeitdauer T3. Die Zeitdauer T3 repräsentiert eine Zeitdauer ohne Unterstützung der Antriebseinheit, während die Zeitdauer T4 eine Zeitdauer mit Unterstützung der Antriebseinheit darstellt. Die Zeitdauern T3 und/oder T4 können bevorzugt 60 Sekunden betragen. Insbesondere wird der Schwellwert SP1 dem Schwellwert SP2 angeglichen, wenn die Zeitdauer T4 zunimmt, oder der Schwellwert SP2 wird dem Schwellwert SP1 angeglichen, wenn die Zeitdauer T3 zunimmt.

Bevorzugt ist die erste Verzögerungszeit TT1, die zweite Verzögerungszeit TT2, die erste Verzögerungszeit TP1, die zweite Verzögerungszeit TP2 anzeigbar und/oder einstellbar ist. Anzeigbar bedeutet beispielsweise, dass die Informationen zu den Verzögerungszeiten auf einem Display oder ein Bildschirm angezeigt werden, beispielweise einem Bordcomputer oder einem Smartphone. Die Anzeige zeigt insbesondere die aktuellen Werte der Verzögerungszeiten an, sodass der Fahrer sie leicht ablesen und überprüfen kann. Einstellbar ermöglicht dem Fahrer insbesondere die Anpassung der Verzögerungszeiten an seine individuellen Anforderungen durchzuführen. Die Möglichkeit, die Verzögerungszeiten anzuzeigen und/oder einzustellen, ermöglicht es dem Fahrer, die Motorunterstützung an seine individuellen Vorlieben anzupassen. Je nach Fahrstil, Gelände oder persönlicher Präferenz kann der Fahrer die Verzögerungszeiten anpassen, um die optimale Balance zwischen eigener Leistung und Motorunterstützung zu finden.

Weiter bevorzugt ist der erste Schwellwert SP1, der zweite Schwellwert SP2, die erste Schwellwert ST1, der zweite Schwellwert ST2 und der dritte Schwellwert ST3 anzeigbar und/oder einstellbar ist. Anzeigbar bedeutet beispielsweise, dass die Informationen zu den Verzögerungszeiten auf einem Display oder ein Bildschirm angezeigt werden, beispielweise einem Bordcomputer oder einem Smartphone

Die Erfindung betrifft auch ein Elektrofahrrad, umfassend eine Antriebseinheit und eine Steuereinheit, welche eingerichtet ist, die Antriebseinheit gesteuert zu betätigen, wobei die Steuereinheit ferner eingerichtet ist, ein Verfahren nach einem der vorhergehenden Ansprüche durchzuführen.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine vereinfachte schematische Ansicht eines Elektrofahrrads, bei dem ein Verfahren zum Betreiben des Elektrofahrrads gemäß einem bevorzugten Ausführungsbeispiel der Erfindung durchgeführt wird,
- Figur 2: einen Diagrammverbund zur Darstellung von Zusammenhängen aus Fahrerleistung und Motorunterstützung, und
- Figur 3: einen Diagrammverbund zur Darstellung von Zusammenhängen aus Fahrerleistung, Fahrerdrehmoment und Motorunterstützung.

### Ausführungsformen der Erfindung

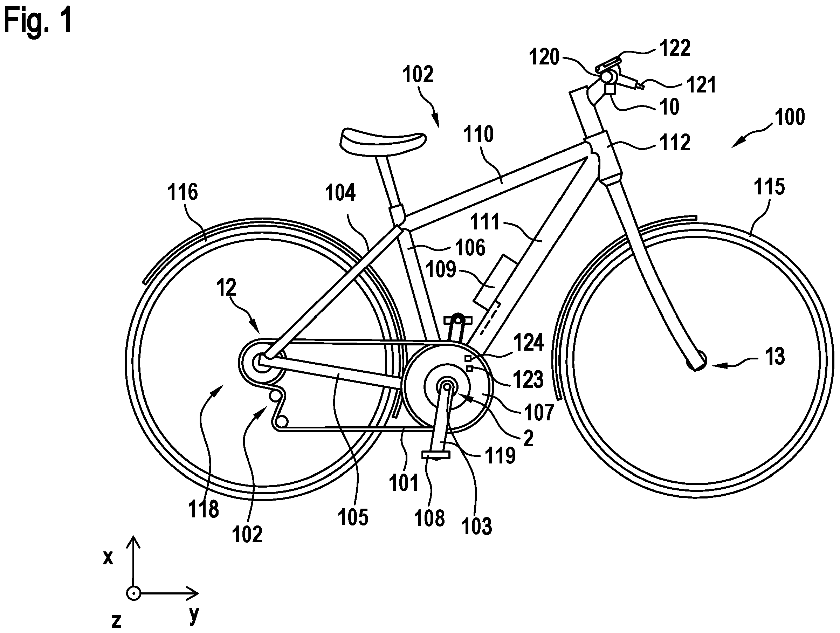

Figur 1 zeigt eine vereinfachte schematische Ansicht eines Elektrofahrrads 100 mit einer Antriebseinheit 2. Das Elektrofahrrad 100 weist ein Vorderrad 115 und ein Hinterrad 116 auf, wobei das Hinterrad 116 an der Hinterradnabe 118 mittels eines Verbindungselements 101, insbesondere einer Kette, und mittels der Antriebseinheit 2 durch eine Trittkraft des Radfahrers auf die Pedale 108 angetrieben wird. Die Pedale 108 sind dazu mit Kurbeln 119 verbunden, welche wiederum mit jeweils unterschiedlichen Enden der Tretwelle 103 verbunden sind. Die Antriebseinheit 2, ist dazu eingerichtet, ein an der Tretwelle 103 wirkendes Fahrerdrehmoment zu unterstützen und an ein Abtriebsritzel 107 zu übertragen, welches in unmittelbarem Eingriff mit dem Verbindungselement 101 zum Antrieb des Elektrofahrrads 100 steht. Das Rahmenbauteil 102 des Elektrofahrrads 100 umfasst insbesondere ein Sitzrohr 106, eine Sitzstrebe 104, ein Unterrohr 111, ein Oberrohr 110, ein Steuerrohr 112, eine Kettenstrebe 105, welche unlöslich miteinander verbunden, beispielsweise miteinander verschweißt sind. Weiterhin weist das Fahrrad 100 eine Lenkeinheit 120 auf. Schematisch dargestellt ist eine Eingabevorrichtung 10, die wie eine Benutzeranzeige 122 und einer Bremsvorrichtung 121, an der Lenkeinheit 120 befestigt ist. Die Antriebseinheit 2 ist über ein Kabel (angedeutet) mit einem Batteriemodul 109 verbunden und wird durch dieses gespeist. Ferner zeigt Figur 1 schematisch eine elektrisch ansteuerbare Gangschaltvorrichtung 102. Die Antriebseinheit 2 umfasst neben der Steuereinheit 124 noch eine Sensoreinheit 123, wobei die Sensoreinheit beispielsweise als Inertialsensoreinheit, als Drehmomentsensoreinheit und/oder Kadenzsensoreinheit 123 ausgeführt sein kann. Insbesondere ist aus Figur 1 ersichtlich, dass eine Längsachse des Fahrzeugs eine Parallele zu Y, die Querachse eine Parallele zu Z und die Hochachse eine Parallele zu X, darstellt.

Die Steuereinheit 124 ist dabei eingerichtet, um die Antriebseinheit 2 in Abhängigkeit einer Pedalbetätigung eines Fahrers des Elektrofahrrads 100 zu betätigen. Im Detail wird die Antriebseinheit 2 derart gesteuert betätigt, dass in Abhängigkeit eines mittels Muskelkraft des Fahrers erzeugten Fahrerdrehmoments ein Motordrehmoment erzeugt wird, um den Fahrer beim Pedalieren motorisch zu unterstützen. Dabei ist vorgesehen, dass die Erzeugung des Motordrehmoments in Abhängigkeit einer Höhe des Fahrerdrehmoments gesteuert wird. Das Fahrerdrehmoment kann beispielsweise mittels eines Sensoreinheit 123 erfasst werden.

Die Steuereinheit 124 ist dabei eingerichtet, ein Verfahren zum Betreiben der Antriebseinheit 2 durchzuführen. Mittels des Verfahrens kann während des Fahrbetriebs, also insbesondere während der Fortbewegung, des Elektrofahrrads 100 eine optimierte, besonders energiesparende und geräuscharme Betriebsweise der Antriebseinheit 102 in Abhängigkeit der Pedalbetätigung durch den Fahrer erfolgen.

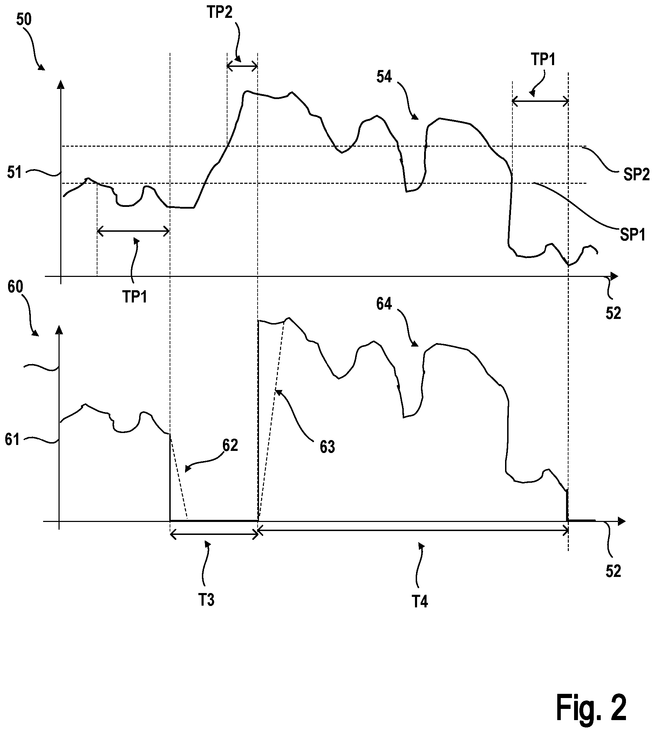

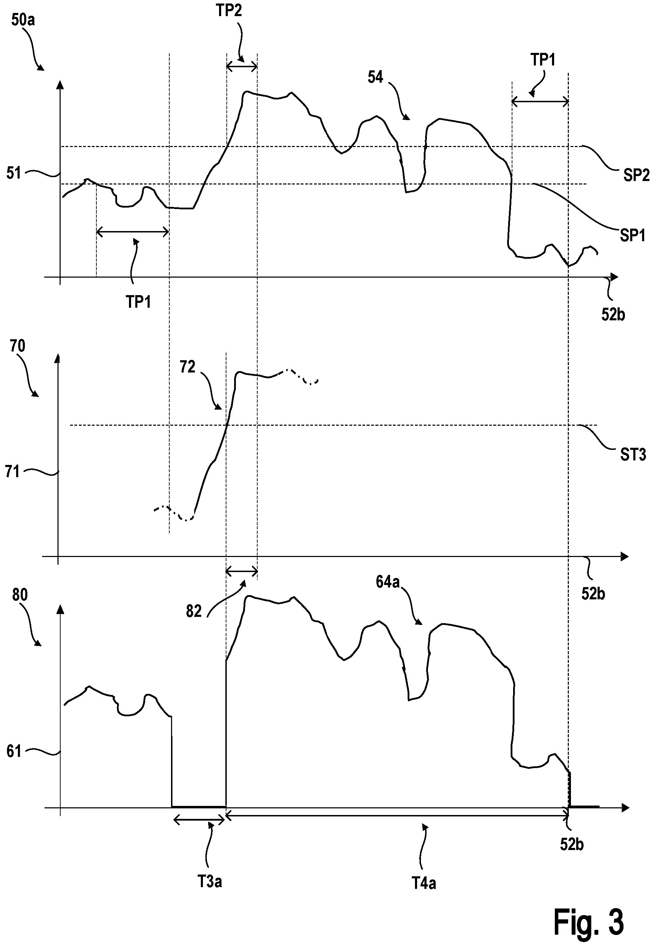

### Der Ablauf des Verfahrens wird nachfolgend in Bezug auf die Figuren 2 und 3 im Detail beschrieben

Figur 2 zeigt einen Verbund aus den Diagrammen 50 und 60, wobei alle Diagramme eine gemeinsame Zeitachse 52 teilen. Das Diagramm 50 zeigt auf der Y-Achse eine Fahrerleistung 51, bei der die Fahrerleistungen mit einem beispielhaften Verlauf 54 dargestellt sind. In Diagramm 50 sind auch ein erster Schwellwert SP1 und ein darüber liegender zweiter Schwellwert SP2 der Fahrerleistung 54 zu sehen, die mehrfach von der Kurve der Fahrerleistung 54 geschnitten werden. Wenn man dem Verlauf der Kurve der Fahrerleistung 54 folgt, erkennt man, dass der erste Schwellwert SP1 nach einem Abfallen der Fahrerleistung 54 zum ersten Mal geschnitten wird, woraufhin eine erste Verzögerungszeit TP1 gestartet wird. Die erste Verzögerungszeit TP1 kann insbesondere als Countdown interpretiert werden. Nach dem ersten Schnittpunkt der Fahrerleistung 54 mit dem ersten Schwellwert SP1 gibt es bis zum Ablauf der ersten Verzögerungszeit TP1 keinen weiteren Schnittpunkt mit dem ersten Schwellwert SP1. Allerdings zeigt das erste Diagramm beispielsweise, dass die Pedale weiterhin betätigt werden, was bedeutet, dass der Fahrer des Elektrofahrrads 100 weiterhin eine geringe Fahrerleistung erzeugt, die jedoch zu gering ist, um das Aussetzen der Unterstützung der Antriebseinheit zu beenden (bis zu einem Erreichen oder Überschreiten des zweiten Schwellwert SP2). Nach Ablauf der ersten Verzögerungszeit TP1 wird die Unterstützung der Antriebseinheit 2 ausgesetzt. Das Aussetzen der Unterstützung der Antriebseinheit 2 dauert eine Zeitdauer T3, die beim Beginn des Aussetzens gestartet wird und endet, wenn die Fahrleistung den zweiten Schwellwert SP2 erreicht oder überschreitet und nach Ablauf der Zeitdauer TP2. Diagramm 50 zeigt diesen Schnittpunkt mit dem zweiten Schwellwert SP2 nach einem monoton steigenden Verlauf der Fahrleistung 54, ab dem ein zweite Verzögerungszeit TP2 einsetzt. Die zweite Verzögerungszeit TP2 kann dabei insbesondere als Countdown interpretiert werden. Nach dem ersten Schnittpunkt der Fahrleistung 54 mit dem zweiten Schwellwert SP2 gibt es bis zum Ablauf der zweiten Verzögerungszeit TP2 keinen weiteren Schnittpunkt mit dem zweiten Schwellwert SP2, insbesondere keine Abnahme der Fahrleistung bis zu einem Erreichen oder Unterschreiten des zweiten Schwellwerts SP2. Somit ergibt sich keine Unterbrechung des Countdowns für TP2, der eine Rückstellung der Zeiten bewirken würde.

Das zweite Diagramm 60 zeigt die Unterstützung der Antriebseinheit 2, die beispielsweise als Unterstützungsleistung in Watt oder mittels eines Unterstützungsdrehmoments in Nm angegeben sein kann. Das Diagramm 60 zeigt auf der Y-Achse 61b eine Unterstützung der Antriebseinheit bei der die Fahrerleistungen mit einem beispielhaften Verlauf 54 dargestellt sind Insbesondere ist in Diagramm 60 ein beispielhafter Verlauf 64 der Unterstützung der Antriebseinheit 2 dargestellt. Es ist eine vertikale Linie gezeigt, die das Ende der ersten Verzögerungszeit TP1 markiert, nach der die Unterstützung der Antriebseinheit 2 in Diagramm 60 ausgesetzt wird. Am Ende der ersten Verzögerungszeit TP1, wenn die Unterstützung durch die Antriebseinheit 2 ausgesetzt wird, beginnt eine Zeitdauer T3. Bei einem Aussetzen ist die Unterstützung durch die Antriebseinheit 2 gleich Null. Die Zeitdauert T3 repräsentiert insbesondere eine Zeitdauer ohne Motorunterstützung. Während dieser Zeit. Am Ende einer zweiten Verzögerungszeit TP2 beginnt eine Zeitdauer T4, die eine Zeitdauer mit Unterstützung der Antriebseinheit repräsentiert.

Insbesondere lässt sich aus der Kombination von Diagramm 50 und Diagramm 60 erkennen, dass die erste Verzögerungszeit TP1, wenn der erste Schwellwert der Fahrerleistung SP1 zum zweiten Mal unterschritten wird, zeitlich kürzer ist als beim ersten Unterschreiten des ersten Schwellwerts SP1 der Fahrerleistung. Sowohl die Verzögerungszeit TP1 als auch TP2 können dynamisch verändert werden, insbesondere während einer Fahrt. Am Ende der Darstellung des Diagramms 50 und am Ende der ersten Verzögerungszeit TP1 wird die Unterstützung der Antriebseinheit 2 erneut ausgesetzt und eine weitere Zeitdauer ohne Motorunterstützung T3 beginnt erneut (nicht dargestellt). Darüber hinaus zeigt Diagramm 60 eine erste Rampe 62 und eine zweite Rampe 63. Die erste Rampe 62 stellt das Herunterfahren der Unterstützung der Antriebseinheit 2 dar, was für den Fahrer des Elektrofahrrads 100 eine Steigerung des Komforts bedeuten kann. Die Unterstützung der Antriebseinheit fällt also nicht sprunghaft ab, sondern wird linear heruntergefahren, insbesondere in einer bestimmten Herunterfahrzeitdauer. Umgekehrt ermöglicht die zweite Rampe 63 das Hochfahren der Unterstützung der Antriebseinheit 2, was sich in einer kontinuierlichen Steigerung der Unterstützungsleistung 64 in der zweiten Rampe 63 zeigt. Die zweite Rampe 63 umfasst insbesondere eine Hochfahrzeitdauer. Auch in diesem Fall gibt es keinen sprunghaften Anstieg der Unterstützung der Antriebseinheit 2, was sich ohne eine zweite Rampe 63 beispielsweise in einem Ruck widerspiegeln würde.

Figur 3 zeigt eine Kombination aus einem dritten Diagramm 50a, einem vierten Diagramm 70 und einem fünften Diagramm 80. Das dritte Diagramm 50a entspricht dem ersten Diagramm 50 und teilt sich in Fig. 3 eine x-Achse 52a mit dem vierten Diagramm 70 und dem fünften Diagramm 80. Gleiche Bezugszeichen beziehen sich auf die gleichen Merkmale.

Das vierte Diagramm 70 stellt das Drehmoment des Fahrers dar, das auf der Y-Achse 71 dargestellt wird. Das Diagramm 70 zeigt einen beispielhaften Verlauf des Fahrerdrehmoments 72 während eines Fahrvorgangs. Ein Fahrvorgang ist gekennzeichnet durch eine schnelle Steigerung des Drehmoments des Fahrers. Alternativ kann der beispielhafte Verlauf des Fahrerdrehmoments 72 auch einen Beschleunigungsvorgang, insbesondere einen Kickdown, repräsentieren. Das Diagramm zeigt auch einen dritten Schwellwert des Fahrerdrehmoments ST3, der speziell dazu geeignet ist, eine plötzliche Steigerung des Drehmoments, wie sie beispielsweise bei einem Beschleunigungsvorgang auftritt, zu erfassen.

Das fünfte Diagramm 80 zeigt eine Motorunterstützung der Antriebseinheit 2, ähnlich wie das zweite Diagramm 60. Dafür wurde die y-Achse 61 gewählt, um die Motorunterstützung darzustellen. Es wird auch ein beispielhafter Verlauf der Motorunterstützung 64a in der zweiten Ausführungsform dargestellt. Es ist zu beachten, dass die Zeitdauer T3a ohne Motorunterstützung in Diagramm 80 kürzer ist als die Zeitdauer T3 ohne Motorunterstützung in Diagramm 60.

Die Betrachtung der drei Diagramme 50a, 70 und 80 zeigt, dass der zweite Schwellwert SP2 überschritten wurde, was dazu führen kann, dass das Aussetzen nach Ablauf der zweiten Verzögerungszeit TP2 beendet wird. Jedoch zeigt Diagramm 70, dass der dritte Schwellwert ST3 des Fahrerdrehmoments überschritten wird, was gemäß Diagramm 80 zu einem vorzeitigen Ende des Aussetzens der Unterstützung der Antriebseinheit 2 führt, insbesondere vor Ablauf der zweiten Verzögerungszeit TP2. Dies wird insbesondere durch die verkürzte zweite Verzögerungszeit TP2, 82 in der Kombination von Diagramm 50 und Diagramm 80 verdeutlicht.

Es ist anzumerken, dass das erste Diagramm 50 sowie das dritte Diagramm 50a, die eine beispielhafte Kurve der Fahrerleistung 54 darstellen, auch für das Fahrerdrehmoment verwendet werden können. Dabei unterscheiden sich der erste Schwellwert SP1 und der zweite Schwellwert SP2 von dem ersten Schwellwert des Fahrerdrehmoments ST1 und dem zweiten Schwellenwert des Fahrerdrehmoments ST2. Die beispielhafte Kurve der Fahrerleistung 54 kann einen ähnlichen Verlauf aufweisen, wobei das Erreichen oder Überschreiten des ersten Schwellwerts ST1 bzw. das Erreichen oder Unterschreiten des zweiten Schwellwerts ST2 entsprechend korrespondiert.

Das Verfahren bietet dabei den Vorteil, dass ein besonders frühzeitiges Abschalten der Motorunterstützung der Antriebseinheit 2 ermöglicht wird, wenn der Fahrer des Elektrofahrrads 100 die Pedale mit einer geringen Kraft betätigt, wobei keine Motorunterstützung mehr notwendig ist. Dadurch kann ein besonders energieeffizienter Betrieb des Elektrofahrrads 100 ermöglicht werden, wodurch eine hohe Reichweite für die elektromotorische Unterstützung bereitgestellt werden kann. Zudem ergibt sich der Vorteil, dass durch das Verfahren diejenige Zeit, die die Antriebseinheit 2 abgeschaltet ist, maximiert werden kann, wodurch insbesondere eine Geräuschentwicklung reduziert werden kann. Damit kann zusätzlich ein besonders hoher Fahrkomfort für den Fahrer des Elektrofahrrads 100 bereitgestellt werden.

## Patentansprüche

1. Verfahren zum Betreiben einer Antriebseinheit (102) eines Elektrofahrrads (100), umfassend die Schritte:
- Ermitteln eines Fahrerdrehmoments 72,
- Ermitteln einer Fahrerleistung 54,
- Aussetzen einer Unterstützung der Antriebseinheit 2, wenn das Fahrerdrehmoment 72 einen ersten Schwellwert ST1 erreicht oder unterschreitet, oder
- Aussetzen der Unterstützung der Antriebseinheit 2, wenn die Fahrerleistung 54 einen ersten Schwellwert SP1 erreicht oder unterschreitet, **dadurch gekennzeichnet, dass**
das Aussetzen der Unterstützung der Antriebseinheit 2 im Falle eines Erreichens oder Unterschreitens des ersten Schwellwerts ST1 nach einer ersten Verzögerungszeit TT1, oder
im Falle eines Erreichens oder Unterschreitens des ersten Schwellwerts SP1 nach einer ersten Verzögerungszeit TP1, erfolgt.

2. Verfahren nach Anspruch 1, **dadurch gekennzeichnet, dass** das Aussetzen der Unterstützung der Antriebseinheit 2 beendet wird,
- wenn das Fahrerdrehmoment 72 den ersten Schwellwert ST1 während der ersten Verzögerungszeit TT1 erreicht oder überschreitet, oder
- wenn die Fahrerleistung 54 den ersten Schwellwert SP1 während der ersten Verzögerungszeit TP1 erreicht oder unterschreitet,

3. Verfahren nach Anspruch 2, **dadurch gekennzeichnet, dass** das Aussetzen der Unterstützung beendet wird,
- Wenn das Fahrerdrehmoment (72) einen zweiten Schwellwert (ST2) des Fahrerdrehmoments erreicht oder überschreitet, insbesondere nach einer zweiten Verzögerungszeit (TT2) und/oder
- Wenn die Fahrerleistung 54 einen zweiten Schwellwert (SP2) der Fahrerleistung, insbesondere nach einer zweiten Verzögerungszeit (TT2),
- wobei der zweite Schwellwert (ST2) größer oder gleich dem ersten Schwellwert (ST1) ist,
- wobei der zweite Schwellwert (SP2) größer oder gleich dem ersten Schwellwert (SP1) ist,

4. Verfahren nach Anspruch 3, **dadurch gekennzeichnet, dass** das Aussetzen der Unterstützung der Antriebseinheit beibehalten wird,
- wenn das Fahrerdrehmoment (72) den zweiten Schwellwert (ST2) während der zweiten Verzögerungszeit (TT2) unterschreitet, oder
- wenn die Fahrerleistung (54) den zweiten Schwellwert (SP2) während der zweiten Verzögerungszeit (TP2) unterschreitet

5. Verfahren nach einem der vorherigen Ansprüche, **dadurch gekennzeichnet, dass** der erste Schwellwert ST1 und/oder der zweite Schwellwert ST2 in Abhängigkeit des ermittelten Fahrerdrehmoments, insbesondere dessen zeitlicher Änderungsrate, bestimmt werden.

6. Verfahren nach einem der vorherigen Ansprüche, **dadurch gekennzeichnet, dass** der erste Schwellwert SP1 und/oder der zweite Schwellwert SP2 in Abhängigkeit der ermittelten Fahrerleistung, insbesondere deren zeitlicher Änderungsrate, bestimmt werden.

7. Verfahren nach einem der vorherigen Ansprüche, wobei der erste Schwellwert SP1 in einem Bereich von 10 W bis 150 W, bevorzugt 20 W bis 80 W besonders bevorzugt bei 30 W liegt.

8. Verfahren nach einem der vorherigen Ansprüche, **dadurch gekennzeichnet, dass** der zweite Schwellwert SP2 in einem Bereich von 10 W bis 250W, bevorzugt 50 W bis 150 W, besonders bevorzugt 80 W liegt.

9. Verfahren nach einem der vorherigen Ansprüche, wobei der erste Schwellwert ST1 in einem Bereich von 0 Nm bis 20 Nm, bevorzugt 3 Nm bis 10Nm, besonders bevorzugt bei 5Nm liegt.

10. Verfahren nach einem der vorherigen Ansprüche, **dadurch gekennzeichnet, dass** der zweite Schwellwert ST2 in einem Bereich von 5 Nm bis 100 Nm, bevorzugt 10 Nm bis 30Nm, besonders bevorzugt bei 20Nm liegt.

11. Verfahren nach einem der vorherigen Ansprüche, **gekennzeichnet durch** den folgenden weiteren Schritt:
- Ermitteln eines Unterstützungsdrehmoments,
wobei das Unterstützungsdrehmoment, ein vom Elektromotor erzeugtes Drehmoment ist und dem Fahrerdrehmoment hinzuaddiert wird,
wobei das Unterstützungsdrehmoment bei dem Aussetzen der Unterstützung der Antriebseinheit über einen vordefinierten Zeitraum 62 heruntergefahren wird,
wobei das Unterstützungsdrehmoment bei einem Beenden des Aussetzens der Unterstützung der Antriebseinheit über einen vordefinierten Zeitraum 63 hochgefahren wird

12. Verfahren nach einem der vorherigen Ansprüche, wobei die erste Verzögerungszeit TT1 eine Zeitdauer von 3 Sekunden aufweist und/oder die zweite Verzögerungszeit TT2 eine Zeitdauer von 0 bis 1 Sekunden, bevorzugt 0 Sekunden beträgt, sowie die die erste Verzögerungszeit TP1 eine Zeitdauer von 3 Sekunden aufweist und/oder die zweite Verzögerungszeit TP2 eine Zeitdauer von 0 bis 1 Sekunden, bevorzugt 0 Sekunden beträgt

13. Verfahren nach einem der vorherigen Ansprüche, **gekennzeichnet durch** die folgenden weiteren Schritte:
- Beenden des Aussetzens der Unterstützung, bei einem Erreichen oder Überschreiten eines dritten Schwellwerts ST3 des Fahrerdrehmoments,
- Anpassen der zweiten Verzögerungsdauer TT2 auf einen Wert von 0 Sekunden.

14. Verfahren nach Anspruch 13, wobei der dritte Schwellwert ST3 in einem Bereich von 10 Nm bis 50 Nm, bevorzugt 20 Nm bis 80 Nm, liegt, besonders bevorzugt 40 Nm beträgt.

15. Verfahren nach einem der vorherigen Ansprüche, **gekennzeichnet durch** die folgenden Schritte:
- Anpassen des Schwellwerts ST1, ST2, ST3, SP1 und/oder des Schwellwerts SP2 in Abhängigkeit einer Zeitdauert T3 oder einer Zeitdauert T4, wobei die Zeitdauer T3 eine Zeitdauer ohne die Unterstützung der Antriebseinheit ist,
wobei die Zeitdauert T4 eine Zeitdauer ab Beendigung des Aussetzens der Antriebseinheit ist,
wobei insbesondere bei einer zunehmenden Zeitdauer T4 der Schwellwert SP1 dem Schwellwert SP2 angeglichen wird oder
wobei bei einer zunehmenden Dauer T3 der Schwellwert SP2 dem Schwellwert SP1 angeglichen wird.

16. Verfahren nach einem der vorherigen Ansprüche, **dadurch gekennzeichnet, dass** die erste Verzögerungszeit TT1, die zweite Verzögerungszeit TT2, die erste Verzögerungszeit TP1, die zweite Verzögerungszeit TP2 anzeigbar und/oder einstellbar ist.

17. Elektrofahrrad, umfassend eine Antriebseinheit (102) und eine Steuereinheit (103), welche eingerichtet ist, die Antriebseinheit (102) gesteuert zu betätigen, wobei die Steuereinheit (103) ferner eingerichtet ist, ein Verfahren nach einem der vorhergehenden Ansprüche durchzuführen.
